# FASCICULE DE BREVET EUROPEEN

(11) **EP 2 354 604 B1**
(45) Date de publication et mention de la délivrance du brevet: **29.04.2015**
(21) Numéro de dépôt: 11163507.4
(22) Date de dépôt: 17.01.2006
(51) Int. Cl.: F16J 15/08

(54) **Joint métallique comportant une surépaisseur formée par au moins une nervure en lacets**
Metalldichtung, die eine Verdickung aufweist, die aus mindestens einer Zickzackrippe besteht
Metal joint comprising a thickened portion made up of at least one twisting rib

(30) Priorité: 17.02.2005 FR 0550457
(43) Date de publication de la demande: 10.08.2011
(62) Demande divisionnaire de: 06000896.8
(73) Titulaire: ElringKlinger AG, 72581 Dettingen (DE)
(72) Inventeur: Burg, Jean-Pascal, 87150 Saint-Gence (FR)
(74) Mandataire: Hoeger, Stellrecht & Partner Patentanwälte

(56) Documents cités:
- EP-A- 1 298 364

## Description

La présente invention se rapporte à un joint métallique comportant une surépaisseur formée par au moins une nervure en lacets, notamment à un joint de culasse comportant une surépaisseur formée par au moins une nervure en lacets.

Un joint de culasse, disposé entre un bloc moteur et une culasse, comprend généralement une ou plusieurs feuilles métalliques ou tôles comportant des ouvertures susceptibles de coopérer avec les chambres de combustion et des orifices permettant le passage de fluides ou des moyens de serrage tels que des tiges filetées.

Les joints de culasse dits dynamiques sont susceptibles de s'adapter d'une part aux variations de l'écartement entre le bloc moteur et la culasse en raison notamment des phénomènes de déformation-dilatation, et d'autre part, aux variations géométriques telles que l'état de surface, le parallélisme, la planéité ou autres, qui sont susceptibles de varier d'un bloc moteur à l'autre ou d'une culasse à l'autre.

Ce type de joint comprend généralement une nervure susceptible d'entourer les ouvertures et/ou les orifices de manière à former une barrière d'étanchéité.

Lorsque le joint est disposé entre le bloc moteur et la culasse, la nervure est fortement comprimée et se déforme de manière à s'adapter à la géométrie des différents éléments. En raison de son élasticité, la nervure est susceptible de se déformer lors du fonctionnement pour s'adapter aux variations de l'écartement entre le bloc moteur et la culasse.

De manière à conserver l'élasticité de la nervure et ne pas atteindre sa déformation plastique lors du montage ou en fonctionnement, on prévoit généralement de manière adjacente un limiteur d'écrasement, appelé stoppeur lorsque ce dernier est intercalé entre la nervure et une ouverture adaptée à une chambre de combustion.

Selon un premier mode de réalisation, le joint comprend un stoppeur sous forme d'une sertissure ménagée au niveau du bord de la tôle délimitant l'ouverture. Ce mode de réalisation ne donne pas satisfaction car le pli engendre au niveau du bord des contraintes importantes conduisant à des fissures et à la détérioration rapide du joint.

Selon un autre mode de réalisation, le joint comprend, au niveau du bord de la tôle délimitant l'ouverture, des bourrelets circulaires et concentriques obtenus par matriçage. Ce mode de réalisation est difficile à mettre en oeuvre et nécessite un outillage coûteux.

Selon un autre mode de réalisation, le stoppeur se présente sous forme d'un anneau distinct relié par tout moyen à une des tôles du joint. Cette solution permet d'obtenir des éléments simples. Toutefois, leur assemblage est problématique et génère des surcoûts, notamment si on cherche à automatiser la fabrication du joint.

Par ailleurs, la présence d'un stoppeur provoque généralement des contraintes mécaniques au niveau des tôles en raison de l'arc-boutement des tôles au moment du serrage. D'autre part, il est nécessaire d'avoir une pression de serrage homogène sur l'ensemble de la surface du joint de culasse pour obtenir une bonne étanchéité.

Aussi, pour résoudre ces problèmes, des surépaisseurs localisées sont prévues dans la zone dite hors gaz c'est-à-dire à l'extérieur des nervures, permettant de réduire les contraintes et d'obtenir une pression de serrage homogène sur l'ensemble de la surface du joint.

Selon un premier mode de réalisation connu, la surépaisseur est obtenue en rapportant un clinquant ou une tôle mince, d'épaisseur inférieure ou égale à 0,1 mm sur la surface d'une des tôles.

Cette solution n'est pas satisfaisante car la mise en place du clinquant n'est pas aisée, ce dernier étant susceptible de se plier. Par ailleurs, il est nécessaire que le clinquant soit lié mécaniquement à la tôle pour jouer pleinement son rôle. Or, la fixation d'un élément extrêmement mince est relativement complexe et coûteuse.

Selon un second mode de réalisation, la surépaisseur est obtenue par matriçage d'une des tôles afin de lui procurer une épaisseur variable en fonction des zones, Cette solution n'est également pas satisfaisante car le matriçage d'une tôle afin de lui donner des épaisseurs variables localisées est relativement complexe et coûteux à mettre en oeuvre.

Par conséquent, quel que soit l'endroit ou la configuration, la réalisation d'une surépaisseur, tel que par exemple un limiteur d'écrasement, est problématique et génère des surcoûts. Cette problématique est accentuée si on cherche à faire varier l'épaisseur de la surépaisseur en fonction des zones.

Aussi, la présente invention vise à pallier les inconvénients de l'art antérieur en proposant un joint métallique comportant une surépaisseur, tel que par exemple un limiteur d'écrasement, de conception simple, avec des rigidités variables réparties selon une cartographie adaptée, notamment aux éléments entre lesquels ledit joint est intercalé.

A cet effet, l'invention a pour objet un joint comprenant au moins une feuille ou plaque, appelée tôle, au moins une ouverture et/ou orifice de manière à faire communiquer des conduits débouchant respectivement au niveau de chaque surface à étancher, au moins une barrière d'étanchéité sous forme d'une nervure ainsi qu'au moins une surépaisseur ménagée sur au moins une tôle, caractérisé en ce qu'au moins une surépaisseur comprend au moins une nervure, ménagée au niveau d'au moins une tôle, s'étendant selon plusieurs lignes, la nervure passant d'une ligne à l'autre en faisant deux lacets opposés.

Cette solution permet d'obtenir de manière simple et économique une surépaisseur avec des rigidités variables réparties selon une cartographie prédéterminée.

D'autres caractéristiques et avantages ressortiront de la description qui va suivre de l'invention, description donnée à titre d'exemple uniquement, en regard des dessins annexés sur lesquels :
- la figure 1 est une vue de dessus d'un joint de culasse,
- la figure 2 est une vue de dessus illustrant en détails un stoppeur selon une première répartition des rigidités,
- la figure 3 est une vue de dessus illustrant en, détails un stoppeur selon une autre répartition des rigidités,
- la figure 4A est une coupe selon la ligne A-A de la figure 3,
- la figure 4B est une coupe selon la ligne B-B de la figure 3, et
- la figure 5 est une coupe illustrant une autre variante du joint de culasse comprenant plusieurs tôles.

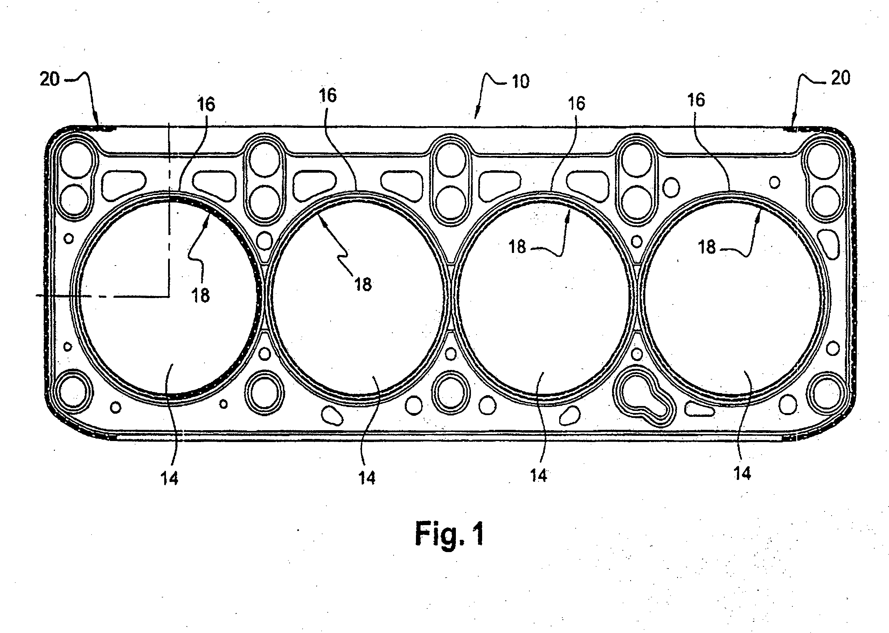

Sur la figure 1, on a représenté en 10 un joint selon l'invention, susceptible d'être intercalé entre une première et une seconde surfaces à étancher, par exemple une culasse et un bloc moteur dans le cas d'un joint de culasse. Bien entendu, l'invention n'est pas limitée à cette application et couvre au contraire toutes les applications nécessitant un joint sensiblement plat.

Selon les cas, la distance séparant les deux surfaces à étancher peut varier en fonctionnement.

Le joint 10 comprend au moins une feuille ou plaque, appelée tôle 12, de préférence métallique, revêtue ou non.

Le joint comprend au moins une ouverture et/ou orifice 14 de manière à faire communiquer des conduits débouchant respectivement au niveau de chaque surface à étancher. Dans le cas d'un joint de culasse, le joint comprend au moins une ouverture susceptible de coopérer avec une chambre de combustion et des orifices permettant le passage de fluides ou des moyens de serrage tels que des tiges filetées.

De manière connue, le joint comprend au moins une barrière d'étanchéité, de préférence dynamique, sous forme d'une nervure 16.

Selon les cas, la ou les nervures 16 s'étendent de manière continue ou non, de manière circulaire ou non. A titre d'exemple, la nervure 16 peut entourer une ouverture 14 prévue pour une chambre de combustion. Dans ce cas, la nervure peut être sensiblement circulaire et être disposée à une distance sensiblement constante du bord du joint délimitant l'ouverture 14. Dans le cas d'un joint de culasse comportant plusieurs ouvertures 14 susceptibles de coopérer avec les chambres de combustion, disposées les unes à côtés des autres, les nervures 16 entourant lesdites ouvertures peuvent se rejoindre et ne pas s'étendre entre les ouvertures 14.

En complément de la ou des nervures 16, le joint comprend au moins une surépaisseur. De préférence, le joint comprend au moins une surépaisseur constituant un limiteur d'écrasement 18 pour chaque ouverture 14, appelé stoppeur, disposé entre le bord de l'ouverture 14 et la nervure 16 et éventuellement au moins une surépaisseur 20 dans les zones hors gaz c'est-à-dire à l'extérieur des nervures 16 permettant de limiter les déformations des éléments à étancher, notamment de la culasse. Avantageusement, les surépaisseurs 20 permettant de limiter les déformations sont prévues à chaque extrémité du joint 10. En variantes, les surépaisseurs 20 pourraient être disposées autour des orifices prévus pour le passage des moyens de serrage et/ou des fluides.

Selon l'invention, une surépaisseur comprend au moins une nervure 22 ménagée au niveau d'au moins une tôle, s'étendant selon plusieurs lignes, la nervure passant d'une ligne à l'autre en faisant deux lacets opposés,

Par ligne, on entend un tracé rectiligne et/ou courbe.

Par lacet, on entend que l'axe médian de la nervure disposé au niveau du creux de ladite nervure effectue au moins une courbe serrée à 180° de manière à obtenir avec une seule nervure au moins deux éléments en saillie successifs juxtaposés selon une direction. Ainsi, lorsque la nervure s'étend sur plusieurs lignes, et passe d'une ligne à l'autre, elle effectue deux lacets opposés de manière à obtenir à partir d'une nervure trois éléments en saillie successifs, juxtaposés selon une direction.

Ainsi, selon cet agencement, on obtient des zones de fortes résistances à l'écrasement au niveau des lacets et des zones de moindres résistances à l'écrasement entre les lacets à partir d'une nervure continue.

Selon l'invention, on peut ajuster de manière simple la cartographie des rigidités de la surépaisseur en écartant plus ou moins les zones avec des lacets.

Avantageusement, pour chaque ouverture 14, au moins une nervure 22 avec des lacets formant surépaisseur est prévue entre le bord de l'ouverture 14 et la nervure 16, ladite nervure 22 étant concentrique à l'ouverture 14.

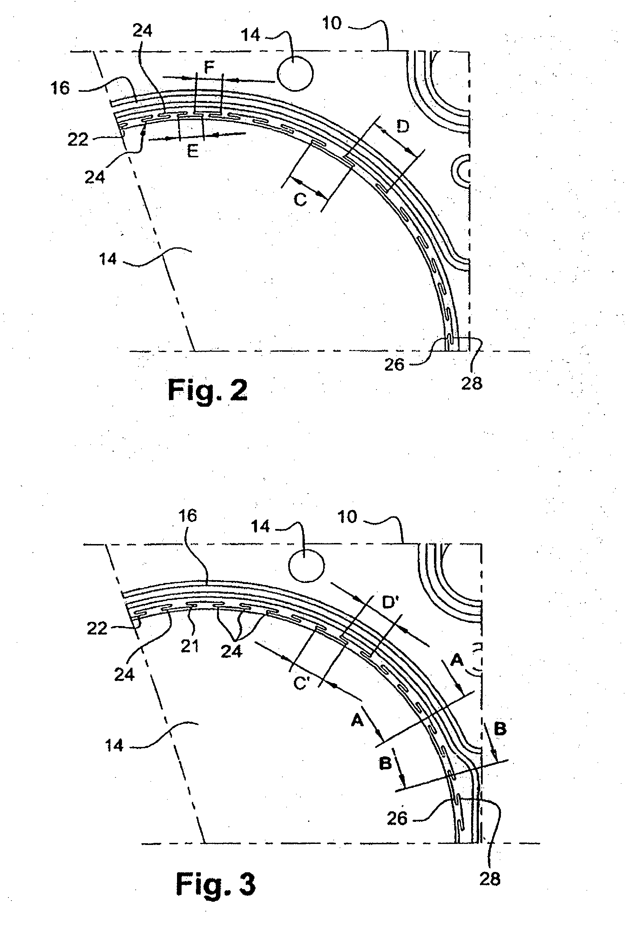

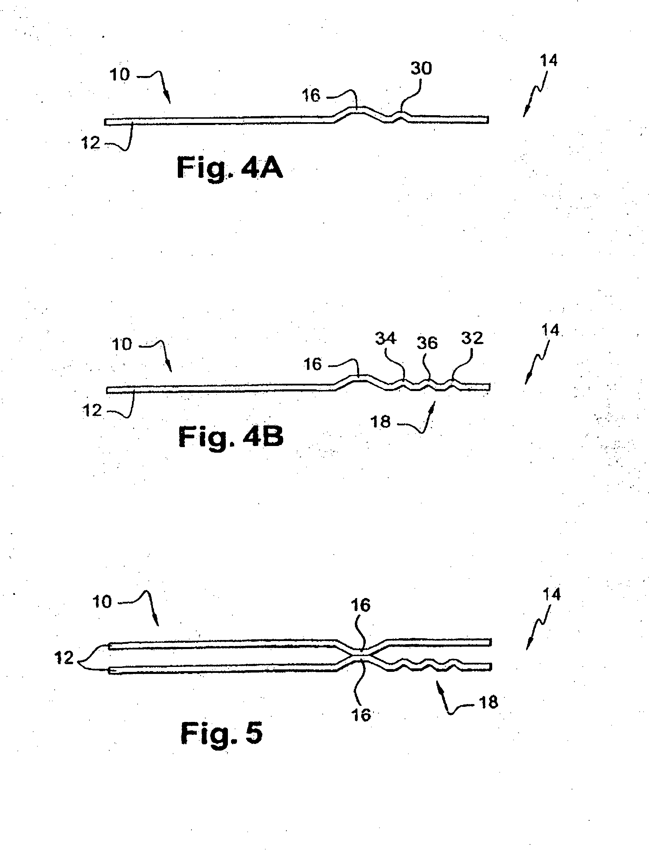

Comme illustré sur les figures 2 et 3, la surépaisseur formant stoppeur comprend au moins une nervure s'étendant en partie selon un premier cercle 26 et selon un second cercle 28, la nervure passant d'un cercle à l'autre en faisant deux lacets opposés, lesdits cercles étant sensiblement concentriques à l'ouverture 14. Ainsi, selon des premières directions radiales, illustrées sur la figure 4A, la surépaisseur comprend un seul élément en saillie 30 entre la nervure 16 et l'ouverture 14 alors que selon des secondes directions radiales, illustrées par la figure 4B, la surépaisseur comprend trois éléments en saillie successifs et juxtaposés un élément en saillie 32 au niveau du cercle 26, un élément en saillie 34 au niveau du cercle 28 et un autre élément en saillie 36 entre les deux lacets.

En variante, la nervure pourrait s'étendre sur plusieurs cercles concentriques en passant d'un cercle à l'autre en faisant des lacets,

Il est possible d'ajuster la résistance à l'écrasement de la surépaisseur en ajustant la distance entre deux zones comportant des lacets comme illustré sur les figures 2 et 3.

Cet agencement permet également d'obtenir une première barrière d'étanchéité grâce à la nervure 22 continue.

En variante, la surépaisseur formant stoppeur peut comprendre plusieurs nervures 22.

De même, il est possible de prévoir des nervures 22 avec des lacets dans les zones hors gaz, notamment autour des orifices pour le passage de fluides ou des moyens de serrage ou sensiblement parallèle au bord périphérique du joint de manière à former des surépaisseurs 20 pour limiter les déformations. Dans ces cas, la nervure s'étend en partie selon plusieurs portions rectilignes et/ou courbes, la nervure passant d'une portion rectiligne et/ou courbe à l'autre en faisant deux lacets opposés, lesdites portions rectilignes et/ou courbes étant sensiblement parallèles entre elles et parallèles au bord du joint ou d'un orifice.

Selon une autre caractéristique de l'invention, la nervure 22 formant surépaisseur est une micro-nervure de largeur de l'ordre de 1 à 2 mm et de hauteur de l'ordre de 0,05 mm.

Avantageusement, la nervure ou micro-nervure 22 est obtenue par déformation plastique, le fond de la nervure ou de la micro-nervure ayant une épaisseur sensiblement égale à celle de la tôle alors que les parois latérales ont une épaisseur inférieure en raison de l'étirement de la matière. Ce type de déformation avec un étirement de la matière permet d'éviter que la nervure ou la micro-nervure disparaisse, notamment entre les zones avec lacets, en raison d'une pression trop importante et de conserver toujours une surépaisseur.

Selon une autre caractéristique de l'invention, le joint comprend une seule tôle comportant au moins une nervure 16 et au moins une surépaisseur formée par une nervure ou micro-nervure avec des lacets.

En variante, le joint peut comprendre un empilage de tôles, les nervures et/ou les surépaisseurs étant disposées sur une tôle ou sur différentes tôles.

Bien entendu, l'invention n'est évidemment pas limitée au mode de réalisation représenté et décrit ci-dessus, mais en couvre au contraire toutes les variantes, notamment en ce qui concerne les formes, les dimensions et les matériaux des différents éléments.

Enfin, l'invention n'est pas limitée à l'application décrite et peut convenir à tous les types de joints métalliques nécessitant une surépaisseur au niveau d'au moins une tôle.

## Revendications

1. Joint comprenant au moins une feuille ou plaque, appelée tôle (12), au moins une ouverture et/ou orifice (14) de manière à faire communiquer des conduits débuchant respectivement au niveau de chaque surface à étancher, au moins une barrière d'étanchéité sous forme d'une nervure (16) ainsi qu'au moins une surépaisseur (20) ménagée sur au moins une tôle, **caractérisé en ce que** ladite surépaisseur (20) comprend au moins une nervure (22), ménagée au niveau d'au moins une tôle, s'étendant selon plusieurs lignes (26, 28) sensiblement parallèles entre elles et parallèles au bord du joint, la nervure (22) passant d'une ligne à l'autre en faisant deux lacets (24) opposés.

2. Joint selon la revendication 1, **caractérisé en ce que** la surépaisseur comprend au moins une nervure s'étendant en partie selon plusieurs portions rectilignes et/ou courbes, la nervure passant d'une portion rectiligne et/ou courbe à l'autre en faisant deux lacets opposés, lesdits portions rectilignes et/ou courbes étant sensiblement parallèles entre elles et parallèles au bord du joint.

3. Joint selon l'une quelconque des revendications précédentes, **caractérisé en ce que** le joint comprend un empilage de tôles (12), et qu'au moins une nervure et au moins une surépaisseur sont disposées sur une tôles ou sur différentes tôles.

4. Joint selon l'une quelconque des revendications précédentes, **caractérisé en ce qu'**au moins une surépaisseur (20) est prévue à chaque extrémité du joint.

5. Joint selon l'une quelconque des revendications précédentes, **caractérisé en ce que** la nervure (22) formant surépaisseur est une micron-nervure de largeur de l'ordre de 1 à 2 mm et de hauteur de l'ordre de 0,05 mm.

6. Joint selon l'une quelconque des revendications précédentes, **caractérisé en ce que** la nervure ou micro-nervure (22) est obtenue par déformation plastique, le fond de la nervure ou de la micro-nervure ayant une épaisseur sensiblement égale à celle de la tôles alors que les parois latérales ont une épaisseur inférieure en raison de l'étirement de la matière.

7. Joint de culasse selon l'une quelconque des revendications précédentes.

## Patentansprüche

1. Dichtung, umfassend mindestens eine Tafel oder Platte, genannt Blech (12), mindestens eine Öffnung und/oder ein Loch (14), um Kanäle miteinander kommunizieren zu lassen, die jeweils in der Ebene jeder abzudichtenden Fläche münden, mindestens eine Dichtungsbarriere in Form einer Rippe (16), sowie mindestens eine Verdickung (20), die auf mindestens einem Blech angeordnet ist, **dadurch gekennzeichnet, dass** die Verdickung (20) mindestens eine Rippe (22) umfasst, die auf der Ebene mindestens eines Blechs angeordnet ist und sich entlang mehrerer Linien (26, 28) erstreckt, welche im Wesentlichen parallel zueinander und parallel mit dem Rand der Dichtung sind, wobei die Rippe (22) unter Bildung zweier einander gegenüberliegender Kehren (24) von einer Linie zur anderen verläuft.

2. Dichtung nach Anspruch 1, **dadurch gekennzeichnet, dass** die Verdickung mindestens eine Rippe umfasst, die sich teilweise entlang mehrerer geradliniger und/oder gekrümmter Abschnitte erstreckt, wobei die Rippe unter Bildung zweier einander gegenüberliegender Kehren (24) von einem geradlinigen und/oder gekrümmten Abschnitt zum anderen verläuft, wobei die geradlinigen und/oder gekrümmten Abschnitte im Wesentlichen parallel zueinander und parallel mit dem Rand der Dichtung sind.

3. Dichtung nach einem der vorhergehenden Ansprüche, **dadurch gekennzeichnet, dass** die Dichtung einen Stapel von Blechen (12) umfasst, und dass mindestens eine Rippe und mindestens eine Verdickung auf einem Blech oder auf verschiedenen Blechen angeordnet sind.

4. Dichtung nach einem der vorhergehenden Ansprüche, **dadurch gekennzeichnet, dass** mindestens eine Verdickung (20) an jedem Ende der Dichtung vorgesehen ist.

5. Dichtung nach einem der vorhergehenden Ansprüche, **dadurch gekennzeichnet, dass** die Rippe (22), die eine Verdickung bildet, eine Mikro-Rippe mit einer Breite in der Größenordnung von 1 bis 2 mm und einer Höhe in der Größenordnung von 0,05 mm ist.

6. Dichtung nach einem der vorhergehenden Ansprüche, **dadurch gekennzeichnet, dass** die Rippe oder Mikro-Rippe (22) durch plastische Verformung erhalten wird, wobei der Boden der Rippe oder der Mikro-Rippe eine Dicke aufweist, die im Wesentlichen gleich derjenigen der Bleche ist, während die seitlichen Wände aufgrund der Reckung des Materials eine geringere Dicke aufweisen.

7. Zylinderkopfdichtung nach einem der vorhergehenden Ansprüche.

## Claims

1. Gasket comprising at least one sheet or plate, referred to as sheet metal (12), at least one opening and/or orifice (14) in such a way as to put into communication conduits that open respectively into each surface to be sealed, at least one sealing barrier in the form of a rib (16) as well as at least one thickening (20) arranged on at least one sheet metal, **characterised in that** said thickening (20) comprises at least one rib (22), arranged on at least one sheet metal, extending along several lines (26, 28) substantially parallel to one another and parallel to the border of the gasket, with the rib (22) passing from one line to another by forming two opposite loops (24).

2. Gasket according to claim 1, **characterised in that** the thickening comprises at least one rib extending partially along several straight and/or curved portions, with the rib passing from one straight portion and/or curved portion to the other by forming two opposite loops, said straight and/or curved portions being substantially parallel to one another and parallel to the border of the gasket.

3. Gasket as claimed in any one of the preceding claims, **characterised in that** the gasket comprises a stack of sheet metals (12), and that at least one rib and at least one thickening are arranged on one sheet metal or on different sheet metals.

4. Gasket as claimed in any one of the preceding claims, **characterised in that** at least one thickening (20) is provided at each end of the gasket.

5. Gasket as claimed in any one of the preceding claims, **characterised in that** the rib (22) forming a thickening is a micro-rib with a width in the order of 1 to 2 mm and a height in the order of 0.05 mm.

6. Gasket as claimed in any one of the preceding claims, **characterised in that** the rib or micro-rib (22) is obtained by plastic deformation, with the bottom of the rib or of the micro-rib having a thickness substantially equal to that of the sheet metal while the lateral walls have a lesser thickness due to the drawing of the material.

7. Cylinder head gasket as claimed in any one of the preceding claims.
